(19) Europäisches Patentamt
European Patent Office
Office européen des brevets

(11) EP 2 767 836 B1

(12) EUROPÄISCHE PATENTSCHRIFT

(45) Veröffentlichungstag und Bekanntmachung des Hinweises auf die Patenterteilung:
02.06.2021 Patentblatt 2021/22

(51) Int Cl.:
*G01P 21/00* (2006.01)     *G01C 25/00* (2006.01)
*G01D 18/00* (2006.01)     *G01D 3/08* (2006.01)

(21) Anmeldenummer: 14154408.0

(22) Anmeldetag: 10.02.2014

(54) **Verfahren und Vorrichtung zum Erkennen einer Modulation einer physikalischen Größe**

Method and device for detecting a modulation of a physical parameter

Procédé et dispositif de détection d'une modulation d'une grandeur physique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2013 DE 102013202397**

(43) Veröffentlichungstag der Anmeldung:
**20.08.2014 Patentblatt 2014/34**

(73) Patentinhaber: **Robert Bosch GmbH**
**70442 Stuttgart (DE)**

(72) Erfinder: **Glueck, Manuel**
**72813 St. Johann (DE)**

(56) Entgegenhaltungen:
**EP-A1- 2 631 150          WO-A1-90/06492**
**WO-A1-2007/144013     DE-A1-102008 041 307**
**DE-A1-102008 057 281     US-A- 5 508 920**
**US-A1- 2010 318 257**

EP 2 767 836 B1

**Beschreibung**

Stand der Technik

Die vorliegende Erfindung bezieht sich auf ein Verfahren zum Erkennen einer Modulation einer physikalischen Größe, auf eine entsprechende Vorrichtung sowie auf ein entsprechendes Computerprogrammprodukt.

Mikromechanische Sensoren, wie z. B. Beschleunigungs- oder Drehratensensoren, haben inzwischen einen weiten Einsatzbereich gefunden. Durch große Prozessstreuungen während der Fertigung müssen die Sensoren am Bandende abgeglichen werden. Beim Drehratensensor wird dies durch Einprägung einer Referenzdrehrate in den jeweiligen sensitiven Achsen durchgeführt. Die finale Kalibrierung des Herstellers berücksichtigt jedoch nicht alterungs- oder temperaturbedingte Veränderungen des Sensorausgangs. Nach aktuellem Stand werden die fehlerbehafteten Sensorausgänge während des Betriebs durch Datenfusion verschiedener physikalischer Sensorausgangssignale in einem separaten Schätzalgorithmus korrigiert. Dieser Ansatz wird in der Literatur als Loose-Coupling bezeichnet und kann z. B. durch Kombination eines Beschleunigungs- und Drehratensensors realisiert werden. Alternativ wird häufig zusätzlich noch ein Magnetfeldsensor für die Fusionierung mit eingebunden, wodurch ein System mit 9 Freiheitsgraden entsteht.

In der Patentanmeldung DE 10 2012 202 630 wird eine Methodik zur Erkennung von Störbeschleunigung für die In-Use Kalibrierung von MEMS Beschleunigungssensoren offenbart, wobei mit dieser Methodik nur kurze stationäre Zustände für die Kalibrierung des Beschleunigungssensors erkannt werden müssen.

Die Druckschrift WO 2007/144013 A1 zeigt ein Verfahren und ein System zum Messen der Geschwindigkeit eines sich bewegenden Objektes. Hierbei wird eine zeitliche Ableitung einer physikalischen Größe (Geschwindigkeit) aus mindestens zwei Messsignalen bestimmt. Diese Ableitung wird mit einem Schwellwert verglichen, wobei eine Berechnung des Geschwindigkeitssignals erst dann erfolgt, wenn die Ableitung größer als der Schwellwert ist und somit ein akzeptables Signal-zu-Rausch-Verhältnis vorliegt.

Die Druckschrift EP 2 631 150 A1 zeigt ein verbessertes Verfahren und Arrangement zum Messen von Eigenschaften eines Fahrzeugs, das auf Schienen fährt.

Die Druckschrift WO 90/06492 zeigt Verfahren zur Auswertung eines Sensorsignals.

Die Druckschrift DE 10 2008 041 307 A1 zeigt ein Verfahren zur dynamikangepassten Erfassung einer Winkelgeschwindigkeit mit einem digitalen Winkelgeber.

Offenbarung der Erfindung

Vor diesem Hintergrund wird mit der vorliegenden Erfindung ein Verfahren zum Erkennen einer Variation einer von einem Sensor erfassten physikalischen Größe durch eine Störgröße, weiterhin eine Vorrichtung, die dieses Verfahren verwendet, sowie schließlich ein entsprechendes Computerprogrammprodukt gemäß den unabhängigen Ansprüchen vorgestellt. Vorteilhafte Ausgestaltungen ergeben sich aus den jeweiligen abhängigen Ansprüchen und der nachfolgenden Beschreibung.

Der hier vorgeschlagene Ansatz schafft ein Verfahren zum Erkennen einer Variation einer von einem Sensor erfassten physikalischen Größe durch eine Störgröße nach Anspruch 1.

Unter einer Modulation einer physikalischen Größe wird eine Variation einer von einem Sensor erfassten physikalischen Größe (beispielsweise durch eine Störgröße) verstanden. Insofern kann durch die Erkennung der Modulation der physikalischen Größe das Vorhandensein und/oder eine Überlagerung eines Störeinflusses erkannt werden, der auf die physikalische Größe wirkt, wenn sich ein Signalwerte-liefernder Sensor in Bewegung befindet. Unter einem Signalwert, der zu einem bestimmten Zeitpunkt eine erfasste physikalische Größe repräsentiert, kann ein Abtastwert der physikalischen Größe verstanden werden. Unter einem Kennwert kann ein Wert verstanden werden, der eine Ableitung an einem bestimmten Punkt, insbesondere eine Steigung, repräsentiert, wenn eine Kennlinie unter Verwendung von zumindest zwei aus der Mehrzahl von Sensorsignalwerten bestimmt würde oder wurde. Eine solche Kennlinie kann beispielsweise eine Gerade sein, die derart bestimmt wird oder würde, dass die Summe von quadratischen Fehlern zwischen je einem Sensorsignalwert von einem entsprechenden Punkt auf der Kennlinie minimal wird. Beispielsweise kann auch der Kennwert derart bestimmt werden, dass eine Steigung zwischen zwei zu benachbarten Zeitpunkten abgetasteten Sensorsignalwerten bestimmt und für die nachfolgende Identifizierung der Modulation der physikalischen Größe verwendet wird. Unter einem vorbestimmten Verhältnis zwischen dem Kennwert und dem Schwellwert kann eine Beziehung verstanden werden, bei der der Kennwert größer oder kleiner als der Schwellwert ist.

Unter den ersten Sensorsignalwerten können Sensorsignalwerte verstanden werden, die mit einem größeren Abtastzeitintervall erfasst wurden, als die zweiten Sensorsignalwerte. Die ersten Sensorsignalwerte können somit die physikalische Größe in einem größeren Zeitfenster abbilden, als die zweiten Sensorsignalwerte. Insbesondere können eine gleiche Anzahl von ersten und zweiten Sensorsignalwerten in den jeweils betreffenden Speichern abgespeichert werden. Unter einem Entscheidungskennwert kann ein Parameter verstanden werden, der auf der Basis eines Kreuzkorrelationskoeffizienten bestimmt wurde. Insbesondere kann dieser Parameter durch eine Integration der Kreuzkorrelationskoeffizienten an unterschiedlichen Verschiebepositionen der Kreuzkorrelation über unterschiedliche Verschiebungswerte bestimmt werden. Unter einer vorbestimmten Beziehung zwischen dem Entscheidungskennwert und dem Erkennungsschwellwert kann ein Verhältnis verstanden werden, bei dem der Entscheidungskennwert größer oder kleiner als der Erkennungsschwellwert ist.

Der hier vorgestellte Ansatz basiert auf der Erkenntnis, dass eine Ruhelage des Sensors durch eine besonders vorteilhafte Auswertung von Signalen möglich ist, die von dem Sensor bereitgestellt werden. Insbesondere kann durch die Bestimmung und Auswertung des Kennwerts eine zeitliche Veränderung der physikalischen Größe erkannt werden, die einen Hinweis darauf gibt, dass die physikalische Größe von einer Störgröße überlagert ist. Auch durch die Auswertung einer Kreuzkorrelation von zwei Sensorsignalsätzen, die die gleiche physikalische Größe jedoch mit unterschiedlichen Abtastintervallen repräsentiert, kann eine Überlagerung einer Störgröße über die zu erfassen die physikalische Größe, insbesondere bei einer Bewegung des Sensors, erkannt werden.

Der hier vorgestellte Ansatz bietet den Vorteil, dass von einem Sensor bereits zur Verfügung stehende Sensorsignalwerte für die physikalische Größe vorteilhaft ausgewählt und miteinander verknüpft werden können, um aus den zur Verfügung stehenden Sensorsignalwerten eine Information zu erhalten, die auf andere Vorgehensweisen nur schwierig zu erhalten wäre. Der hier vorgeschlagene Ansatz ist dabei technisch sehr einfach und kostengünstig umsetzbar und erfordert lediglich einen geringen numerischen oder schaltungstechnischen Aufwand.

Die vorliegende Erfindung schafft ferner eine Vorrichtung nach Anspruch 9, die ausgebildet ist, um die Schritte des hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die vorliegende Erfindung schafft ferner ein Computerprogrammprodukt nach Anspruch 12 mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einer vorstehend beschriebenen Vorrichtung ausgeführt wird.

Besonderes günstig ist eine Ausführungsform der vorliegenden Erfindung, bei der im Schritt des Bildens die Kennlinie als lineares Ausgleichspolynom, insbesondere als Gerade gebildet wird. Eine solche Ausführungsform der vorliegenden Erfindung bietet den Vorteil, dass ein bereits ausgereiftes Verfahren zur Ermittlung der Kennlinie verwendbar ist. Zugleich bietet eine derart gebildete Kennlinie die Möglichkeit einer präzisen Bestimmung einer Modulation der physikalischen Größe.

Günstig ist ferner eine Ausführungsform der vorliegenden Erfindung, bei der im Schritt des Bildens als Kennwert ein die erste Ableitung oder Steigung der Kennlinie repräsentierender Wert verwendet wird. Insbesondere die erste Ableitung oder Steigung kann eine besonders präzise Identifizierung der Modulation der physikalischen Größe ermöglichen, da ein solcher Kennwert technisch sehr einfach auszuwerten ist und dennoch eine hinreichend genaue Information über die vom Sensor erfasste physikalische Größe ermöglicht.

In der Ausführungsform der vorliegenden Erfindung kann im Schritt des Identifizierens die Modulation der physikalischen Größe dann erkannt werden, wenn der Kennwert größer als der Schwellwert ist. Diese Ausführungsform der vorliegenden Erfindung bietet den Vorteil einer technisch besonders einfachen Identifizierung der Modulation der physikalischen Größe.

Besonders zuverlässig und schaltungstechnisch zu versehen numerisch kann die Modulation der physikalischen Größe dann erkannt werden, wenn gemäß einer Ausführungsform der vorliegenden Erfindung im Schritt des Bildens eine Kennlinie bestimmt wird, die unter Anwendung eines Ausgleichsberechnungsverfahrens, insbesondere durch Anwendung eines Verfahrens zur Minimierung der quadratischen Fehler bestimmt wird.

Technisch besonders einfach aufgrund der geringen auszuführenden mathematischen Operationen kann gemäß einer Ausführungsform der vorliegenden Erfindung im Schritt des Bildens der Kennwert unter Verwendung von zwei Sensorsignalwerten der physikalischen Größe und einem Zeitintervall gebildet werden, wobei das Zeitintervall eine Zeitdifferenz repräsentiert, die zwischen dem Erfassen der für die Bildung des Kennwertes verwendeten Sensorsignalwerte liegt.

Besonders gut vergleichbar sind die ersten und zweiten Sensorsignalwerte dann, wenn gemäß eines Beispiels, welches nicht Teil der beanspruchten Erfindung ist, im Schritt des Speicherns eine gleiche Anzahl von ersten Sensorsignalwerten im ersten Speicher und zweiten Sensorsignalwerten im zweiten Speicher erfolgt.

Bei einem weiteren Beispiel wird beim Schritt des Erkennens die Modulation der physikalischen Größe dann erkannt, wenn der Entscheidungskennwert kleiner als der Erkennungsschwellwert ist. Ein derartiges Beispiel bietet den Vorteil, dass durch den Vergleich eine technisch sehr einfach umzusetzende Wirklichkeit zur Identifizierung der Modulation der physikalischen Größe möglich ist.

Bei einem weiteren Beispiel wird beim Schritt des Erkennens ferner eine Ausgleichsgerade für die Kreuzkorrelationskoeffizienten an unterschiedlichen Verschiebungswerten bestimmt, insbesondere wird die Ausgleichsgerade unter Anwendung eines Verfahrens zur Minimierung der quadratischen Fehler bestimmt, und die Modulation der physikalischen Größe wird dann erkannt, wenn eine Steigung der Ausgleichsgerade (betragsmäßig) kleiner als ein vordefinierter Geradenschwellwert ist. Ein derartiges Beispiel bietet den Vorteil, dass auch insbesondere bei einem korrelierten Sensorrauschen die Erkennung einer Modulation einer physikalischen Größe möglich ist.

In einer weiteren Ausführungsform der vorliegenden Erfindung können im Schritt des Einlesens oder Speicherns Sensorsignalwerte eingelesen oder gespeichert werden, die zumindest einer Komponente einer Beschleunigung und/oder einer magnetische Größe repräsentieren, die von einem Sensor aufgezeichnet wurde. Insbesondere eine Beschleunigung oder eine magnetische Größe (beispielsweise einen magnetischen Fluss) repräsentierende Sensorsignalwerte lassen sich hierbei besonders gut auswerten, um die Modulation der physikalischen Größe zu erkennen.

Die Erfindung wird nachstehend anhand der beigefügten Zeichnungen beispielhaft näher erläutert. Es zeigen:

Fig. 1    ein Blockschaltbild eines Sensorsystems mit einer Vorrichtung gemäß einem Ausführungsbeispiel der vorliegenden Erfindung;

Fig. 2    eine Darstellung einer Verdrehung des Sensorkoordinatensystems eines in drei Dimensionen messenden Beschleunigungssensors;

Fig. 3    ein Diagramm, in dem drei Ausgangssignale des Beschleunigungssensors eines sich um die in x-Richtung ausgerichtete Sensorkomponente drehenden Beschleunigungssensors abgebildet sind;

Fig. 4    ein Diagramm zur Darstellung eines Messsignals, welches durch den beispielhaft verwendeten FIFO-Speicher mit N Elementen gefenstert wird;

Fig. 5    ein Diagramm einer normierten Kreuzkorrelationsfunktion im statischen Falle;

Fig. 6    ein Diagramm einer normierte Kreuzkorrelationsfunktion bei vorhandener Rotation oder Störbeschleunigung eines Beschleunigungssensors als Sensor;

Fig. 7    ein Diagramm einer normierten Kreuzkorrelationsfunktion von leicht korreliertem Sensorrauschen bei dem die physikalische Größe nicht in der entsprechenden Achse vom Sensor gemessen wird; und

Fig. 8    ein Ablaufdiagramm eines Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Ein wichtiger Bestandteil für die in der DE 10 2012 202 630 vorgeschlagene Architektur zum Selbstabgleich eines Beschleunigungssensors ist eine Ruhelageerkennung durch den Erdbeschleunigungsvektor. Bisher publizierte Methoden zum Erkennen von Störbeschleunigungen basieren auf einer Varianzanalyse der einkommenden Messdaten oder auf einem Vergleich der Mittelwerte der einkommenden Messdaten. Diese Herangehensweisen eignen sich sehr gut zum Erkennen von kurzen, ruckartigen Bewegungen. Ein generelles Problem tritt hier aber bei der Erkennung von sehr kleinen Bewegungen, wie z. B. eine Rotation mit 0.1°/sec, auf. Die Frequenz des modulierten Erdbeschleunigungsvektors würde in diesem Fall 0,3 mHz betragen. Um diese Frequenzbereiche mithilfe der DFT/FFT im Frequenzbereich aufzulösen, wäre eine Fensterlänge von größer 3600 Sekunden notwendig. Bei einer Online-Selbstkalibrierung würde dies zu einer nicht bewältigbaren Datenmenge und Beobachtungszeit führen.

Der hier vorgestellte Ansatz dient der Erkennung von sehr kleinen Rotationsbewegungen auf Basis des modulierten Erdbeschleunigungsvektors, welche vom Beschleunigungssensor erfasst werden.

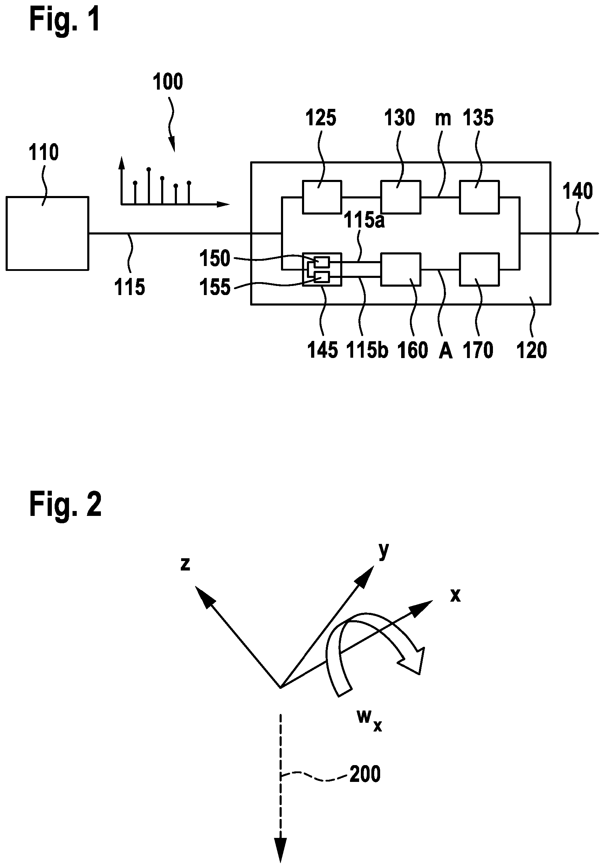

Fig. 1 zeigt ein Blockschaltbild einer eines Sensorsystems 100 mit einer Vorrichtung gemäß einem Ausführungsbeispiel der vorliegenden Erfindung. Das Sensorsystem 100 umfasst dabei einen Sensor 110, mit dem eine physikalische Größe, wie beispielsweise eine Beschleunigung, eine magnetische Größe (beispielsweise ein magnetischer Fluss) erfasst werden können. Zugleich umfasst der Sensor 110 einen in der Fig. 1 nicht dargestellten Abtaster, der ein kontinuierliches, die physikalische Größe repräsentierendes Signal in vorbestimmten Zeitintervallen abgetastet. Der Sensor 110 mit liefert somit als Ausgangssignale Sensorsignalwerte 115, die als zeitdiskrete Abtastwerte vorliegen. Diese Sensorsignalwerte 115 werden nun einer Vorrichtung 120 zu ermitteln einer Modulation der physikalischen Größe zugeführt, in welcher beispielsweise erkannt werden kann, ob die physikalische Größe durch Störeinflüsse moduliert wurde. Diese Störeinflüsse verfälschen insbesondere dann ein vom Sensor 110 geliefertes Ergebnis stark, wenn sich der Sensor 110 nicht in einer Ruhelage befindet und sehr kleine Abweichungen der physikalischen Größe durch den Sensor 110 erfasst werden soll, da in diesem Fall die Störeinflüsse auf die zu erfassende physikalische Größe sehr gering sind

In der Vorrichtung 120 zum Erkennen der Modulation der physikalischen Größe werden nun in einer Einleseschnittstelle 125 eine Mehrzahl der Sensorsignalwerte 115 eingelesen. Die eingelesenen Sensorsignalwerte 115 werden nachfolgend zu einer Einheit 130 zum Bilden eines eine Ableitung einer Kennlinie repräsentierenden Kennwertes m übertragen. Die genaue Funktion oder Arbeitsweise der Einheit 130 zum Bilden des eine Ableitung einer Kennlinie repräsentierenden Kennwerts m wird nachfolgend noch näher beschrieben. Der Kennwert m wird dann zu einer Einheit 135 zum Identifizieren einer Modulation der physikalischen Größe übertragen, wobei die Modulation der physikalischen Größe beispielsweise durch Störeinflüsse dann erkannt wird, wenn der Kennwert min einem vorbestimmten Verhältnis zu einem Schwellwert steht. Beispielsweise kann, wenn der Kennwert m größer als der Schwellwert ist, die Modulation der physikalischen Größe durch Störeinflüsse identifiziert werden. Wird erkannt, dass eine Modulation der physikalischen Größe durch Störeinflüsse erfolgt, kann ein entsprechendes Modulationssignal 140 an der weitere, in der Fig. 1 nicht dargestellte Einheiten oder Komponenten ausgegeben werden, die eine durch die Störungseinflüsse auftretende Ungenauigkeit des vom Sensor 110 gelieferten Signals bzw. der Sensorsignalwerte 115 berücksichtigen.

Alternativ oder zusätzlich können die Sensorsignalwerte 115 einer Einheit 145 zum Speichern zugeführt werden. In dieser Einheit 145 zum Speichern ist ein erster Speicher 150 und ein zweiter Speicher 155 vorgesehen, in denen einzelne der Sensorsignalwerte 115 abgespeichert werden. Dabei sollte die Zeitdauer bzw. ein Zeitintervall zwischen zwei im ersten Speicher 150 aufeinanderfolgend abgespeicherten ersten Sensorsignalwerten 115a größer bzw. viel größer sein, als die Zeitdauer bzw. ein Zeitintervall zwischen zwei im zweiten Speicher 155 aufeinanderfolgend abgespeicherten zweiten Sensorsignalwerten 115b. Beispielsweise kann das Zeitintervall zwischen zwei im ersten Speicher 150 aufeinanderfolgend abgespeicherten ersten Sensorsignalwerten 115a zehnmal so groß sein, wie das Zeitintervall zwischen zwei im zweiten Speicher 155 aufeinanderfolgend abgespeicherten zweiten Sensorsignalwerten 115b. Insofern werden im ersten Speicher 150 erste Sensorsignalwerte 115a abgespeichert, die eine vom Sensor 110 aufgezeichnete physikalische Größe über einen längeren Zeitraum abbilden, als die zweiten Sensorsignalwerte 115b, die im zweiten Speicher 155 abgespeichert werden. Dabei können im ersten Speicher 150 und im zweiten Speicher 155 jeweils eine gleiche Anzahl N von Sensorsignalwerten 115 abgespeichert werden. Die im ersten Speicher 150 gespeicherten ersten Sensorsignalwerte 115a sowie die im zweiten Speicher 155 gespeicherten zweiten Sensorsignalwerte 115b werden nun einer Einheit 160 zum Ermitteln einer Kreuzkorrelation zugeführt, in welcher eine Entscheidungskennwert A bestimmt wird. Dieser Entscheidungskennwert A repräsentiert eine aufintegrierte Fläche unter einem Kreuzkorrelationskoeffizienten an einer bestimmten Verschiebeposition über unterschiedliche Verschiebungswerte, die für die Korrelationsfunktion berücksichtigt werden. Der Entscheidungskennwert A wird nun einer Einheit 170 zum Erkennen der Modulation der physikalischen Größe zugeführt, in welcher überprüft wird, ob der Entscheidungskennwert A in einer vorbestimmten Beziehung zu einem Erkennungsschwellwert steht. Beispielsweise kann in der Einheit 170 zum Erkennen der Modulation der physikalischen Größe eine tatsächlich erfolgte Modulation der physikalischen Größe beispielsweise durch Störeinflüsse vorliegt, wenn der Entscheidungskennwert kleiner als der Erkennungsschwellwert ist. Der Erkennungsschwellwert kann dabei beispielsweise abhängig von einer Anzahl N von im ersten Speicher 150 und/oder zweiten Speicher 155 gespeicherten Sensorsignalwerten 115 sein. Wird nun in der Einheit 170 zum Erkennen eine tatsächlich vorliegende in Modulation der physikalischen Größe erkannt, kann ebenfalls das Modulationssignal 140 ausgegeben werden, um weiteren in der Fig. 1 nicht dargestellten Einheiten einen Hinweis darauf zu geben, dass das vom Sensor 110 bereitgestellte Signal bzw. die Sensorsignalwerte 115 durch Störeinflüsse überlagert sind.

In der nachfolgenden Beschreibung soll die Funktionsweise der Vorrichtung 120 zum Erkennen einer Modulation einer physikalischen Größe näher beschrieben werden. Hierbei wird die Funktionsweise der Vorrichtung 120 zum Erkennen am Beispiel einer Methodik zur Erkennung von Störbeschleunigungen oder Rotationsbewegungen mit durch einen Beschleunigungssensor beschrieben, welche als Sensor 110 gemäß Fig. 1 verwendet wird.

Fig. 2 zeigt in diesem Zusammenhang eine Darstellung einer Verdrehung des Sensorkoordinatensystems eines in drei Dimensionen (d. h. in x-Richtung, y-Richtung und z-Richtung) messenden Beschleunigungssensors, wobei eine ferner die Wirkungrichtung einer Erdbeschleunigung 200 dargestellt ist und die Verdrehung des Beschleunigungssensors, um dessen x-Achse herum mit einer Drehrate von $w_x$ erfolgt.

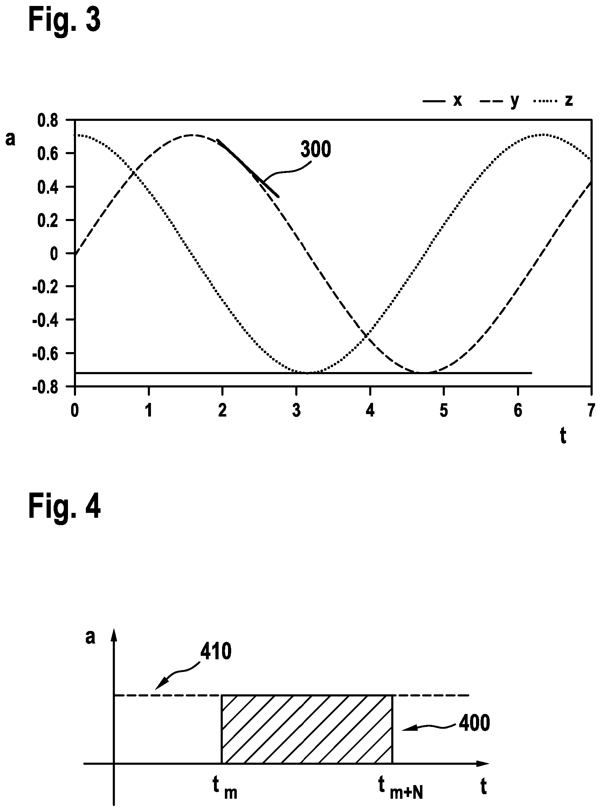

Fig. 3 zeigt ein Diagramm, in dem drei Ausgangssignale des Beschleunigungssensors (d. h. je einem pro Messdimension des dreidimensionalen Beschleunigungssensors) des sich um die x-Richtung bzw. die in x-Richtung ausgerichtete Sensorkomponente drehenden Beschleunigungssensors abgebildet sind. Hierbei ist ersichtlich, dass das Signal, das eine Beschleunigung des Sensors in x-Richtung repräsentiert, keine Störbeschleunigung als Modulation des Erdbeschleunigungsvektors durch die Drehung des Sensors mit der Drehrate $w_x$ erfasst, wogegen die Kennlinien, welche eine Beschleunigung des Sensors in y- bzw. z-Richtung repräsentieren, jeweils Störbeschleunigungen als Modulation des Erdbeschleunigungsvektors durch die Drehung des Sensors mit der Drehrate $w_x$ erfassen.

Um nun die Modulation der Beschleunigungen a des Sensors durch die Drehung mit der Drehrate $w_x$ in y- und z-Richtung zu identifizieren, kann eine Kennlinie wie die in der Fig. 3 zum Sensorsignal in y-Richtung dargestellte Ausgleichsgerade 300 bestimmt werden. Diese Ausgleichsgerade 300 kann durch die Auswertung von N Sensorsignalwerten (Abtastpunkten) beispielsweise wie folgt bestimmt werden. Das Erkennen der Modulation des Erdbeschleunigungsvektors lässt sich somit beispielsweise durch die Auswertung der vorhandenen linearen Steigung im jeweiligen Beschleunigungssignal ermitteln. Dazu wird ein FIFO-Datenpuffer (beispielsweise die Einleseschnittstelle 125 aus Fig. 1) für die einkommenden Abtastwerte 115 der Größe N definiert, wobei die einzelnen Signalwerte 115 zu den Zeitpunkten i durch die Werte y (t$_i$) mit i=1,2,...,N bezeichnet werden. Durch diese N Abtastwerte y(t$_i$) wird ein lineares Ausgleichspolynom

$$\overline{y}(t) = m \cdot t + b,$$

$$\sum_{i=1}^{N} \left( y(t_i) - \overline{y}(t_i) \right)^2 \rightarrow \min$$

gelegt. Dies bedeutet, dass eine (Ausgleichs-) Gerade $\overline{y}(t) = m \cdot t + b$ mit der Steigung m bestimmt wird (beispielsweise in der Einheit 130 zum Bilden gemäß der Fig. 1), für die die Summe der quadratischen Fehler minimal wird. Als Entscheidungskriterium, ob eine Modulation des Erdbeschleunigungsvektors 200 stattfindet oder nicht, wird die Steigung m der Ausgleichsgeraden $\overline{y}(t)$ (beispielsweise in der Einheit 135 zum Identifizieren gemäß der Fig. 1) ausgewertet. Wenn die berechnete Steigung m einen Grenzwert übersteigt, liegt eine Modulation und somit eine Bewegung des Bauteils vor und es kann ein entsprechendes Modulationssignal 140 ausgegeben werden.

In der vorstehend beschriebenen Vorgehensweise wurde die Ausgleichsrechnung herangezogen um die lineare Steigung m im Signal der in y-Richtung messenden Komponente des Sensors 110 zu berechnen. Diese Vorgehensweise ist vor allem dann zu benutzen bzw. vorteilhaft, wenn im Beschleunigungssignal (für die entsprechende Messrichtung) ein erheblicher Rauschanteil vorhanden ist. Alternativ könnte die Steigung m im Signal direkt durch die erste diskrete Ableitung

$$m_i = \frac{y_{i+1} - y_i}{\Delta t}$$

approximiert werden. Hierbei wird zu jedem Abtastwert y(t$_i$) bzw. y$_i$ am Abtastzeitpunkt i die Steigung in Bezug auf den zeitlich nachfolgenden Abtastwert i+1 gebildet, unter Berücksichtigung der Zeitdifferenz $\Delta t$, die zwischen den Abtastwerten y$_i$ und y$_{i+1}$ vergangen ist. Hierdurch kann technisch sehr einfach durch eine einfach auszuführende Formel an einzelnen zeitlichen Positionen die Steigung im erfassten Messsignal erkannt werden.

Die Steigung der unter Verwendung der Sensorsignalwerte 115 (Abtastwerte) erhaltenen Steigung gibt nun einen Hinweis auf das Vorliegen einer Modulation der zu messenden physikalischen Größe. Ist diese Steigung nämlich sehr klein (d. h. nahe dem Wert null, wie es für das Messsignal für die in x-Richtung messende Sensorkomponente in der Fig. 3 dargestellt ist), kann davon ausgegangen werden, dass in diesem Signal keine Modulation der zu messenden physikalischen Größe durch einen Störungseinfluss erfolgt ist.

Gemäß einem anderen Aspekt bzw. einer alternativen oder zusätzlichen Vorgehensweise zur Erkennung von Modulationen in einer physikalischen Größe können sehr kurze Beobachtungszeiträume mit wenig Datenpunkten zum Erkennen dieser Bewegungen verwendet werden.

Ein wichtiger Aspekt dieses Ansatzes ist eine Störbeschleunigungserkennung basierend auf den Abtastwerten eines Beschleunigungssensors, welcher die Modulation des Erdbeschleunigungsvektors erfasst. Die Detektion im Zeitbereich durch Varianzanalyse oder Mittelwertvergleich erfordert einen nicht hinnehmbaren Beobachtungszeitraum und dadurch auch entsprechend hohe Datenmengen. Ebenso ist im Frequenzbereich eine Auflösung von sehr kleinen Frequenzen nur durch sehr große Beobachtungszeiträume möglich. Ein gewichtiger Vorteil des nun vorgestellten zweiten Ansatzes besteht in der Verwendung von sehr kleinen Beobachtungszeiträumen und dadurch entsprechend wesentlich geringeren Datenmengen für die Zwischenspeicherung.

Für die Erkennung des Ruhezustandes des Sensors (der beispielsweise durch den in der Fig. 1 dargestellten Sensor 110 gebildet wird) wird eine Kreuzkorrelationsfunktion verwendet. Im Allgemeinen ist die Kreuzkorrelationsfunktionsfunktion in zeitkontinuierlichen Systemen wie folgt definiert:

$$R_{xy}(\tau) = \lim_{T \to \infty} \frac{1}{2T} \int_{-T}^{T} x(t) \cdot y(t + \tau) dt$$

Für die Erkennung des Ruhezustandes des Sensors 110 wird ein kleiner (erster) FIFO-Speicher 150 mit N Elementen (d. h. gespeicherten Abtastwerten 115) verwendet, welcher mit der Abtastzeit $t_s$ aktualisiert wird. Ein weiterer (zweiter) FIFO-Speicher 155 mit N Elementen enthält die Historie der letzten N Abtastwerte 115 des Beschleunigungssensors 110 mit der Abtastzeit $t_b$. Das Verhältnis der beiden Abtastzeiten ist wie folgt zu wählen:

$$\frac{t_s}{t_b} \gg 1$$

Beispielsweise kann die Abtastzeit $t_s$ um mindestens das 10-fach größer sein, als die Abtastzeit $t_b$.

Im Falle eines statischen Zustandes stammen alle Messwerte des dreiachsigen Beschleunigungssensors 110 im ersten FIFO-Speicher 150 und zweiten FIFO-Speicher 155 von der gleichen Normalverteilung N($\underline{\mu}$, $\underline{\sigma}$). Durch die zeitlich begrenzte Betrachtung ergibt sich in beiden FIFO-Speichern 150 bzw. 155 ein gefenstertes Signal.

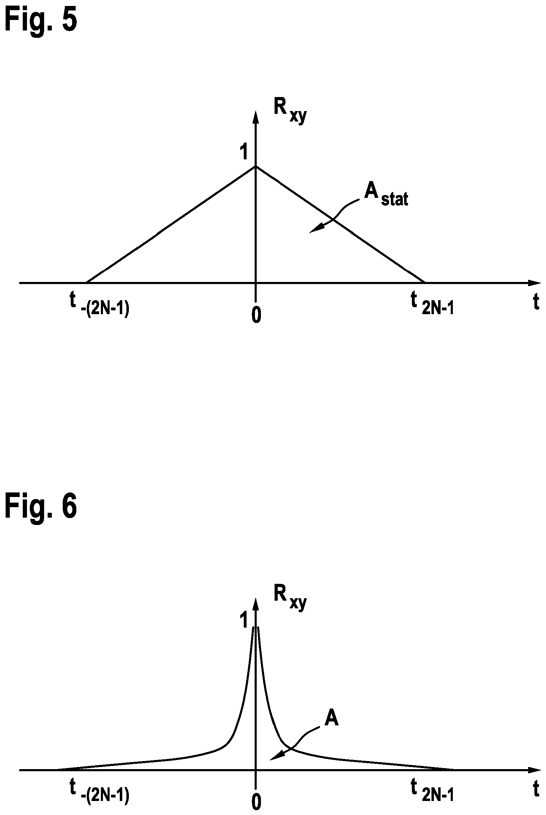

Fig. 4 zeigt ein Diagramm, in dem ein solches (mit dem Beobachtungsfester 400 zwischen den Zeitpunkten $t_m$ und $t_{m+N}$) gefenstertes Signal 410 für einen Messkanal für eine Beschleunigung a dargestellt ist. Somit ist in der Fig. 4 ein Messsignal dargestellt, welches durch den beispielhaft verwendeten FIFO-Speicher mit N Elementen gefenstert wird. Der erste FIFO-Speicher 150 und der zweite FIFO-Speicher 155 enthalten Abtastwerte 115 unterschiedlicher Zeitpunkte. Durch die unterschiedlich gewählten Abtastzeiten der Inhaltswerte der beiden Speicher 150 und 155 enthalten beide Speicher 150 bzw. 155 Abtastwerte 115 a bzw. 115b von unterschiedlichen Beobachtungszeiten. Werden nun die Abtastwerte 115a des ersten FIFO-Speichers 150 und des zweiten FIFO-Speichers 155 als ein gemeinsames Signal betrachtet und die Kreuzkorrelationsfunktion zwischen den beiden Speicherinhalten des ersten FIFO-Speichers 150 und des zweiten FIFO-Speichers 155 gebildet, ergibt sich unter statischen Bedingungen der im Diagramm aus der Fig. 5 dargestellte, achsensymmetrische Verlauf des Kreuzkorrelationskoeffizienten $R_{xy}$ über die Verschiebeposition $\tau$, wobei die Fig. 5 ein Diagramm einer normierten Kreuzkorrelationsfunktion im statischen Falle darstellt. Ein markantes Merkmal ist der eingeschlossene Flächeninhalt $A_{stat}$ der Kreuzkorrelationsfunktion $R_{xy}$ im Zeitraum von t = 0...2N - 1:

$$A_{stat} = 0.5 \cdot \left(1 - \frac{1}{2N}\right) \cdot (2N - 1) + \frac{1}{2N}(2N - 1)$$

Im Falle einer Rotation oder langanhaltender Störbeschleunigung a stammen die einzelnen Abtastwerte 115 vom ersten FIFO-Speicher 150 mit der Abtastzeit $t_s$ von Normalverteilungen mit unterschiedlichen Mittelwerten N($\underline{\mu_1}$,$\underline{\sigma}$) ...N($\underline{\mu_x}$, $\sigma$).

Durch die sehr große Abtastzeit $t_s$ werden im ersten FIFO-Speicher 150 die Langzeitdrifts erfasst, wohingegen im zweiten FIFO-Speicher 155 durch die kürzere (d. h. höhere) Abtastzeit die Kurzzeiteffekte enthalten sind. Sollte eine Rotation oder ein anderes nicht stationäres Signal im Sensorsignal 115 vorhanden sein, ergibt sich ein qualitativer Verlauf der Kreuzkorrelationsfunktion, welcher im Diagramm aus Fig. 6 gezeigt wird, wobei in der Fig. 6 ein Diagramm einer normierte Autokorrelationsfunktion bei vorhandener Rotation oder Störbeschleunigung eines Beschleunigungssensors als Sensor 110 dargestellt ist. Wesentliches Merkmal ist, dass der Flächeninhalt A der Funktion von $t = 0...2N$ - 1 den Flächeninhalt $A_{stat}$ deutlich unterschreitet. Das Ermitteln der Kreuzkorrelation mit dem Entscheidungskennwert A kann hierbei beispielsweise in der Einheit 160 zum Ermitteln gemäß der Fig. 1 erfolgen, wogegen die Auswertung bzw. der Vergleich des Entscheidungskennwerts mit einem als Erkennungsschwellwert dienenden Wert $A_{stat}$ in der Einheit 170 zum Erkennen gemäß der Fig. 1 erfolgen kann.

Ein Sonderfall, welcher bei der hier vorgestellten Methodik eintreten kann, ist, dass der Erdbeschleunigungsvektor nicht oder nur mit sehr geringem Anteil auf eine einzelne Messachse des Beschleunigungssensors 110 einwirkt. In diesem Fall dominiert das Sensorrauschen, wodurch die Autokorrelationsfunktion einem Diracimpuls gleicht.

$$R_{xx}(\tau) = \delta(\tau)$$

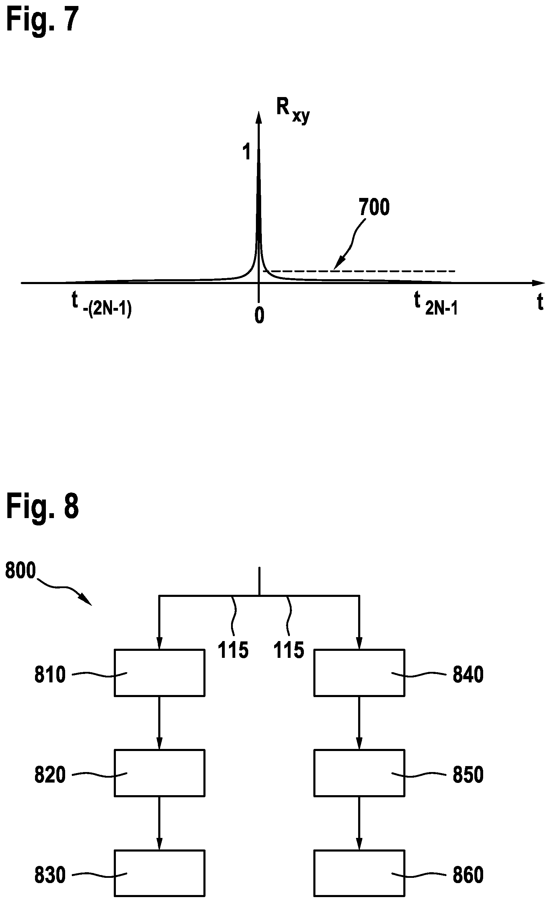

Im Falle von korreliertem Sensorrauschen ergibt sich kein idealer Diracimpuls, sondern eine sehr schnell abfallende Kreuzkorrelationsfunktion gegenüber der Kreuzkorrelationsfunktion im statischen Falle. Das Flächenkriterium als Entscheidungsmaß heranzuziehen versagt, da die eingeschlossene Fläche A auch deutlich unter $A_{stat}$ liegt. Um diesen Fall zu kompensieren, wird eine Ausgleichsgerade 700 durch die Kreuzkorrelationsfunktion gelegt. Liegt die Steigung m dieser Geraden nahe bei 0 (ist also die Steigung m sehr klein) kann auf dem Kanal ein Sensorrauschen identifiziert werden. Veranschaulicht wird dieses Prinzip in dem Diagramm aus der Fig. 7, wobei in Fig. 7 ein Diagramm einer normierten Kreuzkorrelationsfunktion von leicht korreliertem Sensorrauschen dargestellt ist und die gestrichelte Linie die Ausgleichsgerade 700 repräsentiert.

Die hier vorgestellten Ausführungsmöglichkeiten der Erfindung können beliebig zur Störbeschleunigungs- und Rotationserkennung durch einen Beschleunigungssensor verwendet werden. Besonders eignet sich diese Methodik zum Abgleich des Drehratensensors eines 6-DoF-Moduls, bestehend aus Beschleunigungs- und Drehratensensor. Denkbar ist jedoch auch der Einsatz der hier vorgeschlagenen Vorgehensweisen auf andere physikalische Größen als die Beschleunigung oder die Rotation.

Fig. 8 zeigt ein Ablaufdiagramm eines Ausführungsbeispiels der vorliegenden Erfindung als Verfahren 800 zum Erkennen einer Modulation einer physikalischen Größe. Das Verfahren 800 umfasst einen Schritt 810 des Einlesens einer Mehrzahl von Sensorsignalwerten, wobei die Sensorsignalwerte je die zu einem bestimmten Zeitpunkt erfasste physikalische Größe repräsentieren. Ferner umfasst das Verfahren 800 einen Schritt 820 des Bildens eines eine Ableitung einer Kennlinie repräsentierenden Kennwertes, wobei der Kennwert einer Kennlinie zugeordnet ist, die unter Verwendung von zumindest zwei der Mehrzahl von Sensorsignalwerten bestimmbar ist. Ferner umfasst das Verfahren 800 einen Schritt 830 des Identifizierens der Modulation einer physikalischen Größe, wenn Kennwert in einem vorbestimmten Verhältnis zu einem Schwellwert steht. Alternativ oder zusätzlich umfasst das Verfahren 800 einen Schritt 840 des Speicherns einer Mehrzahl von ersten Sensorsignalwerten in einen ersten Speicher und Einlesen einer Mehrzahl von zweiten Sensorsignalwerten in einen zweiten Speicher, wobei die ersten und zweiten Sensorsignalwerte je die zu einem bestimmten Zeitpunkt erfasste physikalische Größe repräsentieren und die ersten Sensorsignalwerte mit einem größeren Abtastzeitintervall erfasst wurden, als die zweiten Sensorsignalwerte. Ferner umfasst das Verfahren 800 einen Schritt 850 des Ermittelns einer Kreuzkorrelation zwischen den ersten und zweiten Sensorsignalwerten, um einen Entscheidungskennwert zu ermitteln, der eine aufintegrierte Fläche unter einem Kreuzkorrelationskoeffizienten an unterschiedlichen Verschiebepositionen über unterschiedliche Verschiebungswerte repräsentiert. Schließlich umfasst das Verfahren 800 einen Schritt 860 des Erkennens der Modulation der physikalischen Größe, wenn der Entscheidungskennwert in einer vorbestimmten Beziehung zu einem Erkennungsschwellwert steht.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (800) zum Erkennen einer Variation einer von einem Sensor (110) erfassten physikalischen Größe (a) durch eine Störgröße, wobei das Verfahren (800) die folgenden Schritte aufweist:

   - Einlesen (810) einer Mehrzahl von Sensorsignalwerten (115), wobei die Sensorsignalwerte (115) je die zu einem bestimmten Zeitpunkt ($t_i$) erfasste physikalische Größe (a) repräsentieren;
   - Bestimmen einer Kennlinie (300) unter Verwendung von zumindest zwei der Mehrzahl von Sensorsignalwerten (115);
   - Bilden (820) eines eine Ableitung der Kennlinie (300) repräsentierenden Kennwertes (m), wobei der Kennwert (m) der Kennlinie (300) zugeordnet ist; und
   - Identifizieren (830) der Variation der physikalischen Größe (a) durch die Störgröße, wenn der Kennwert (m) in einem vorbestimmten Verhältnis zu einem Schwellwert steht,

   wobei

   - im Schritt des Bildens (820) die Kennlinie (300) als Ausgleichspolynom, insbesondere als lineares Ausgleichspolynom oder als Gerade, gebildet wird, und
   - im Schritt des Identifizierens (830) die Variation der physikalischen Größe (a) durch die Störgröße dann erkannt wird, wenn der Kennwert (m) größer als der Schwellwert ist.

2. Verfahren (800) gemäß Anspruch 1, **dadurch gekennzeichnet, dass** durch das Erkennen der Variation der physikalischen Größe (a) das Vorhandensein und/oder eine Überlagerung eines Störeinflusses erkannt wird, der auf die physikalische Größe (a) wirkt, wenn sich der Signalwerte-liefernder Sensor (110) in Bewegung befindet.

3. Verfahren (800) gemäß Anspruch 1 oder 2, **dadurch gekennzeichnet, dass** im Schritt des Bildens (820) als Kennwert ein die erste Ableitung oder Steigung der Kennlinie (300) repräsentierender Wert verwendet wird.

4. Verfahren (800) gemäß einem der vorangegangenen Ansprüche, **dadurch gekennzeichnet, dass** im Schritt des Bildens (820) eine Kennlinie bestimmt wird, die unter Anwendung eines Ausgleichsberechnungsverfahrens, insbesondere durch Anwendung eines Verfahrens zur Minimierung der quadratischen Fehler bestimmt wird.

5. Verfahren (800) gemäß einem der vorangegangenen Ansprüche, **dadurch gekennzeichnet, dass** im Schritt des Bildens (820) der Kennwert (m) unter Verwendung von zwei Sensorsignalwerten (115) der physikalischen Größe (a) und einem Zeitintervall ($\Delta t$) gebildet wird, wobei das Zeitintervall ($\Delta t$) eine Zeitdifferenz repräsentiert, die zwischen dem Erfassen der für die Bildung des Kennwertes (m) verwendeten Sensorsignalwerte (115, $y_i$, $y_{i+1}$) liegt.

6. Verfahren (800) gemäß einem der vorangegangenen Ansprüche, **dadurch gekennzeichnet, dass** im Schritt des Einlesens (810) Sensorsignalwerte (115) gespeichert werden, die zumindest einer Komponente (y) einer Beschleunigung und/oder einer magnetische Größe repräsentieren, die von einem Sensor (110) aufgezeichnet wurde.

7. Verfahren (800) gemäß einem der vorherigen Ansprüche, **dadurch gekennzeichnet, dass** der Sensor (110) ein Beschleunigungssensor und die physikalische Größe (a) ein Erdbeschleunigungsvektor ist.

8. Verfahren (800) gemäß Anspruch 7, **dadurch gekennzeichnet, dass** auf Basis des durch die Störgröße variierten Erdbeschleunigungsvektors sehr kleine Rotationsbewegungen, insbesondere eine Rotation mit 0,1°/sec, die vom Beschleunigungssensor erfasst werden, erkannt werden.

9. Vorrichtung (120) zum Erkennen einer Variation einer von einem Sensor (110) erfassten physikalischen Größe (a) durch eine Störgröße, wobei die Vorrichtung (120) die folgenden Merkmale aufweist:

   - Eine Einleseschnittstelle (125) zum Einlesen einer Mehrzahl von Sensorsignalwerten (115), wobei die Sensorsignalwerte (115) je die zu einem bestimmten Zeitpunkt ($t_i$) erfasste physikalische Größe (a) repräsentieren;
   - Eine Einheit zum Bestimmen einer Kennlinie (300) unter Verwendung von zumindest zwei der Mehrzahl von Sensorsignalwerten (115);
   - Eine Einheit (130) zum Bilden eines eine Ableitung der Kennlinie (300) repräsentierenden Kennwertes (m), wobei der Kennwert (m) der Kennlinie (300) zugeordnet ist; und
   - Eine Einheit (135) zum Identifizieren der Variation der physikalischen Größe (a) durch die Störgröße, wenn der Kennwert (m) in einem vorbestimmten Verhältnis zu einem Schwellwert steht,

   wobei

   - die Einheit (130) zum Bilden ausgebildet ist, die Kennlinie (300) als Ausgleichspolynom, insbesondere als lineares Ausgleichspolynom oder als Gerade, zu bilden, und
   - die Einheit (135) zum Identifizieren so ausgebildet ist, dass die Variation der physikalischen Größe (a) durch die Störgröße dann erkannt wird, wenn der Kennwert (m) größer als der Schwellwert ist.

10. Vorrichtung (120) gemäß Anspruch 9, **dadurch gekennzeichnet, dass** der Sensor (110) ein Beschleunigungssensor und die physikalische Größe (a) ein Erdbeschleunigungsvektor ist.

11. Vorrichtung (120) gemäß Anspruch 9 oder 10, **dadurch gekennzeichnet, dass** auf Basis des durch die Störgröße variierten Erdbeschleunigungsvektors sehr kleine Rotationsbewegungen, insbesondere eine Rotation mit 0,1°/sec, die vom Beschleunigungssensor erfasst werden, erkannt werden.

12. Computer-Programmprodukt mit Programmcode zur Durchführung des Verfahrens (800) nach einem der Ansprüche 1 bis 8, wenn das Programmprodukt auf einer Vorrichtung (120) nach einem der Ansprüche 9 bis 11 ausgeführt wird.


**Claims**

1. Method (800) for detecting a variation in a physical variable (a) which is acquired by a sensor (110), by means of an interference variable, wherein the method (800) comprises the following steps:

- reading in (810) a multiplicity of sensor signal values (115), wherein the sensor signal values (115) each represent the physical variable (a) which is acquired at a specific point in time (ti);
- determining a characteristic curve (300) using at least two of the multiplicity of sensor signal values (115) ;
- forming (820) a characteristic value (m) which represents a derivative of the characteristic curve (300), wherein the characteristic value (m) is assigned to the characteristic curve (300), and
- identifying (830) the variation in the physical variable (a) by means of the interference variable if the characteristic value (m) has a predetermined relationship with a threshold value,

wherein

- in the forming (820) step the characteristic curve (300) is formed as a regression polynomial, in particular as a linear regression polynomial or as a straight line, and
- in the identifying (830) step
the variation of the physical variable (a) is detected by means of the interference variable when the characteristic value (m) is higher than the threshold value.

2. Method (800) according to Claim 1, **characterized in that** the detection of the variation in the physical variable (a) makes it possible to detect the presence and/or superimposition of an interference of the variable which acts on the physical variable (a) when the signal-value-supplying sensor (110) is moving.

3. Method (800) according to Claim 1 or 2, **characterized in that** in the forming (820) step a value which represents the first derivative or gradient of the characteristic curve (300) is used as the characteristic value.

4. Method (800) according to one of the preceding claims, **characterized in that** in the forming (820) step a characteristic curve is determined, which is determined by using a compensation calculation method, in particular by applying a method for minimizing the square error.

5. Method (800) according to one of the preceding claims, **characterized in that** in the forming (820) step the characteristic value (m) is formed by using two sensor signal values (115) of the physical variable (a) and a time interval ($\Delta t$), wherein the time interval ($\Delta t$) represents a time difference which occurs between the acquisition of the sensor signal values (115, $y_i$, $y_{i+1}$) which are used for the formation of the characteristic value (m).

6. Method (800) according to one of the preceding claims, **characterized in that** in the reading (810) step sensor signal values (115) which represent at least one component (y) of an acceleration and/or of a magnetic variable which has been recorded by a sensor (110) are stored.

7. Method (800) according to one of the preceding claims, **characterized in that** the sensor (110) is an acceleration sensor, and the physical variable (a) is a gravity acceleration vector.

8. Method (800) according to Claim 7, **characterized in that** very small rotational movements, in particular a rotation of 0.1°/sec, which are sensed by the acceleration sensor, are detected on the basis of the gravity acceleration vector which is varied by means of the interference variable.

9. Device (120) for detecting a variation in a physical variable (a), sensed by a sensor (110), by means of an interference variable, wherein the device (120) comprises the following features:

- a reading in interface (125) for reading in a multiplicity of sensor signal values (115), wherein the sensor signal values (115) each represent the physical variable (a) which is sensed at a specific point in time ($t_i$) ;
- a unit for determining a characteristic curve (300) using at least two of the multiplicity of sensor signal values (115);
- a unit (130) for forming a characteristic value (m) which represents a derivative of the characteristic curve (300), wherein the characteristic value (m) is assigned to the characteristic curve (300); and
- a unit (135) for identifying the variation in the physical variable (a) by means of the interference variable if the characteristic variable (m) has a predetermined relationship with a threshold value, wherein
- the forming unit (130) is designed to form the characteristic curve (300) as a regression polynomial, in particular as a linear regression polynomial or as a straight line, and
- the identifying unit (135) is designed in such a way that the variation in the physical variable (a) is detected by means of the interference variable when the characteristic value (m) is higher than the threshold value.

**EP 2 767 836 B1**

**10.** Device (120) according to Claim 9, **characterized in that** the sensor (110) is an acceleration sensor, and the physical variable (a) is a gravity acceleration vector.

**11.** Device (120) according to Claim 9 or 10, **characterized in that** very small rotational movements, in particular a rotation of 0.1°/sec, which are sensed by the acceleration sensor, are detected on the basis of the gravity acceleration vector which is varied by means of the interference variable.

**12.** Computer program product with program code for carrying out the method (800) according to one of Claims 1 to 8, when the program product is run on a device (120) according to one of Claims 9 to 11.


**Revendications**

**1.** Procédé (800) permettant de reconnaître une variation d'une grandeur physique (a), détectée par un capteur (110), due à une grandeur perturbatrice, le procédé (800) présentant les étapes suivantes consistant à :

- mettre en mémoire (810) une pluralité de valeurs de signal de capteur (115), les valeurs de signal de capteur (115) représentant respectivement la grandeur physique (a) détectée à un instant déterminé ($t_i$) ;
- déterminer une courbe caractéristique (300) en utilisant au moins deux de la pluralité de valeurs de signal de capteur (115) ;
- former (820) une valeur caractéristique (m) représentant une dérivée de la courbe caractéristique (300), la valeur caractéristique (m) étant associée à la courbe caractéristique (300) ; et
- identifier (830) la variation de la grandeur physique (a) due à la grandeur perturbatrice si la valeur caractéristique (m) présente un rapport prédéterminé à une valeur seuil,

dans lequel

- à l'étape de formation (820), la courbe caractéristique (300) est formée sous forme de polynôme de compensation, en particulier de polynôme linéaire de compensation ou sous forme de droite, et
- à l'étape d'identification (830), la variation de la grandeur physique (a) due à la grandeur perturbatrice est reconnue lorsque la valeur caractéristique (m) est supérieure à la valeur seuil.

**2.** Procédé (800) selon la revendication 1, **caractérisé en ce que** la reconnaissance de la variation de la grandeur physique (a) permet de reconnaître la présence et/ou une superposition d'une perturbation qui agit sur la grandeur physique (a) si le capteur (110) fournissant des valeurs de signal est en mouvement.

**3.** Procédé (800) selon la revendication 1 ou 2, **caractérisé en ce qu'**à l'étape de formation (820), une valeur représentant la première dérivée ou le gradient de la courbe caractéristique (300) est utilisée comme valeur caractéristique.

**4.** Procédé (800) selon l'une quelconque des revendications précédentes, **caractérisé en ce qu'**à l'étape de formation (820), une courbe caractéristique est déterminée qui est déterminée en appliquant un procédé de calcul de compensation, en particulier par l'application d'un procédé de minimisation de l'erreur quadratique.

**5.** Procédé (800) selon l'une quelconque des revendications précédentes, **caractérisé en ce qu'**à l'étape de formation (820), la valeur caractéristique (m) est formée en utilisant deux valeurs de signal de capteur (115) de la grandeur physique (a) et un intervalle de temps ($\Delta t$), l'intervalle de temps ($\Delta t$) représentant une différence de temps qui est située entre la détection des valeurs de signal de capteur (115, $y_i$ :, $y_{i+1}$) utilisées pour former la valeur caractéristique (m).

**6.** Procédé (800) selon l'une quelconque des revendications précédentes, **caractérisé en ce qu'**à l'étape de mise en mémoire (810), des valeurs de signal de capteur (115) sont stockées qui représentent au moins une composante (y) d'une accélération et/ou une grandeur magnétique qui ont été enregistrées par un capteur (110).

**7.** Procédé (800) selon l'une quelconque des revendications précédentes, **caractérisé en ce que** le capteur (110) est un capteur d'accélération et la grandeur physique (a) est un vecteur d'accélération due à la gravité.

**8.** Procédé (800) selon la revendication 7, **caractérisé en ce que** sur la base du vecteur d'accélération due à la gravité, amenée à varier due à la grandeur perturbatrice, de très faibles mouvements de rotation, en particulier une rotation de 0,1°/s, qui sont détectés par le capteur d'accélération, sont reconnus.

9. Dispositif (120) permettant de reconnaître une variation d'une grandeur physique (a), détectée par un capteur (110), due à une grandeur perturbatrice, le dispositif (120) présentant les caractéristiques suivantes :

- une interface de mise en mémoire (125) pour mettre en mémoire une pluralité de valeurs de signal de capteur (115), les valeurs de signal de capteur (115) représentant respectivement la grandeur physique (a) détectée à un instant déterminé ($t_i$) ;
- une unité permettant de déterminer une courbe caractéristique (300) en utilisant au moins deux de la pluralité de valeurs de signal de capteur (115) ;
- une unité (130) permettant de former une valeur caractéristique (m) représentant une dérivée de la courbe caractéristique (300), la valeur caractéristique (m) étant associée à la courbe caractéristique (300) ; et
- une unité (135) permettant d'identifier la variation de la grandeur physique (a) due à la grandeur perturbatrice si la valeur caractéristique (m) présente un rapport prédéterminé à une valeur seuil,

dans lequel

- l'unité de formation (130) est réalisée pour former la courbe caractéristique (300) sous forme de polynôme de compensation, en particulier de polynôme linéaire de compensation ou sous forme de droite, et
- l'unité d'identification (135) est réalisée de telle sorte que la variation de la grandeur physique (a) due à la grandeur perturbatrice est reconnue lorsque la valeur caractéristique (m) est supérieure à la valeur seuil.

10. Dispositif (120) selon la revendication 9, **caractérisé en ce que** le capteur (110) est un capteur d'accélération et la grandeur physique (a) est un vecteur d'accélération due à la gravité.

11. Dispositif (120) selon la revendication 9 ou 10, **caractérisé en ce que** sur la base du vecteur d'accélération due à la gravité, amenée à varier due à la grandeur perturbatrice, de très faibles mouvements de rotation, en particulier une rotation de 0,1°/s, qui sont détectés par le capteur d'accélération, sont reconnus.

12. Produit de programme informatique comprenant du code programme pour exécuter le procédé (800) selon l'une quelconque des revendications 1 à 8 si le produit de programme est exécuté sur un dispositif (120) selon l'une quelconque des revendications 9 à 11.

# Fig. 1

**100**

**110**

**125** **130** **m** **135**

**140**

**115a**

**150**
**155**

**115**

**145** **115b** **160** **A** **170** **120**

# Fig. 2

z

y

x

$w_x$

**200**

# Fig. 3

# Fig. 4

# Fig. 5

# Fig. 6

**Fig. 7**

**Fig. 8**

**IN DER BESCHREIBUNG AUFGEFÜHRTE DOKUMENTE**

**In der Beschreibung aufgeführte Patentdokumente**

- DE 102012202630
- WO 2007144013 A1
- EP 2631150 A1
- WO 9006492 A
- DE 102008041307 A1